# EUROPEAN PATENT APPLICATION

(11) **EP 1 089 506 A2**
(43) Date of publication of application: **04.04.2001**
(21) Application number: 00308385.4
(22) Date of filing: 25.09.2000
(51) Int. Cl.: H04L 12/66, H04L 12/56, H04Q 11/04

(54) **Apparatus and method for integrated telecommunications**

(30) Priority: 01.10.1999 US 411781
(71) Applicant: LUCENT TECHNOLOGIES INC., Murray Hill, New Jersey 07974-0636 (US)
(72) Inventor: Cao, Yang, Bradford, MA 01835 (US)
(74) Representative: Watts, Christopher Malcolm Kelway, Dr.

(57) **Abstract**

A telecommunications system includes a convergence protocol that provides direct inter-layer communications between nodes within the network. The transport layer of one network node may communicate directly with the service layer of another network node. The service layer may be configured as an internet protocol (IP) layer, which may employ asynchronous transfer mode switching, and the transport layer may be a SO NET transport layer. Each of the nodes that runs the convergence protocol may be a telecommunications element such as an add-drop-multiplexer (ADM) or a digital cross connect. SONET bandwidth provisioning may be accomplished through the inter-element, inter-layer communications of the convergence protocol.

## Description

### FIELD OF THE INVENTION

The invention relates to telecommunications systems and, more particularly, to the integration of circuit switched and packet switched telecommunications services.

### BACKGROUND OF THE INVENTION

The explosive growth in the use of high-speed data transmission and the demand for differentiated data services strain the ability of existing telecommunications systems, a somewhat awkward marriage of circuit switched and packet switched systems, to meet the surging demand, both today and into the future. Conventional data communications systems which employ the publicly switched telephone network combine circuit switched TDM-based transport with best-effort packet switching, such as internet protocol (IP) switching, to effect data transmission in a manner that emphasizes maximum link utilization.

Telecommunications links may be established in a number of ways, with different advantages accruing to different methods of connection. The direct connection of two or more channels between two instruments, a connection that provides a user with exclusive use of the channels to exchange information, is referred to as a circuit switched, or line switched, connection. Circuit switching is a technique which yields highly reliable service and is particularly suitable for such "real time" communications applications as voice, in which the momentary loss of a channel is annoying, and repeated such losses are unacceptable. Circuit switching is also employed for highly reliable leased-line services. Electronic switching systems, such as the 5ESS may interconnect a multitude of telephone instruments through circuit switching, employing time division multiplexing (TDM), for example. In order to ensure that end-users receive the appropriate quality of service, the switches typically monitor and periodically test the activity of the trunk lines that carry the channels being switched. If a communications error occurs, the switch may employ a "loopback" to isolate, or determine the exact location of, the system component that caused the error. Once the failure is isolated , the system may reconfigure itself so that data may be routed around the failed system component, through a loopback, or take other corrective measures. TDM transport networks provide an assured level of performance and reliability. Technologies, such as Synchronous Optical Network/Synchronous Digital Hierarchy (SDH/SONET) may be employed in the transport infrastructure to provide high-capacity transport, scalable to gigabit per second rates, with excellent jitter, wander, and error performance for voice connections and leased-line applications. SONET/SDH self-healing rings enable service-level recovery within tens of milliseconds following network failures.

Packet switching may be employed to maximize the utilization of telecommunications links, such as leased circuit-switched lines. With the packet switching approach, data is transmitted in packets, and the communications channel is only occupied for the duration of a packet's transmission. After the transmission, the channel is available for use by packets being transferred between other instruments. The links are statistically mutliplexed to achieve maximum link utilization and are typically carried on leased circuits through the TDM transport network. Packet-switched systems often employ Internet Protocol (IP) transport methods to route packets from a source to a destination. Such systems generally employ "best-effort" techniques to deliver the packets and they generally lack the means to guarantee high reliability and predictable performance. Although statistical multiplexing yields high link utilization, the best-effort service provided by IP data networks is accompanied by unpredictable delay, jitter, and packet loss.

Although existing IP data networks provide excellent connectivity, they do not enable controllable distribution of network resources among the various service providers employing the IP data network to provide data transmission services to end users. That is, through a provisioning process that typically requires the intervention of craft workers, a process that takes place relatively infrequently, the TDM-based transport services provide fixed bandwidth communications channels for each service provider. Since packet data traffic is inherently irregular, with bursts of heavy utilization followed by periods of relative inactivity, the fixed bandwidth "pipes" of TDM transport limit the flexibility with which transport users, such as IP data transport service providers, can respond to variation in demand from their end-users. Service providers must rely upon the good behavior of end users, who must scale back their transmissions during periods of heavy congestion. The well-known "tragedy of the commons" teaches that such reliance on the cooperative good behavior of a large group of users may not be a reasonable approach in the long run. This is made particularly clear in light of some applications, such as streaming video, that tend not to cooperate in scaling back traffic during periods of high usage.

Additionally, since the service layer and transport layer are separated in such a multi-layered dual architecture (circuit switched transport/IP) telecommunications system, transport management is segregated into separate operation and maintenance functions. In turn, this segregation of operations and maintenance functions generally requires the coordination of separate organizations and renders the process of end-to-end provisioning of a channel a difficult task. Such provisioning requires an inordinate amount of expertise and time, complicates the task of traffic engineering, and, as a result, the quality of service suffers while, at the same time, the transport core is underutilized.

A system and method which provide network infrastructure support to provide differentiated service guarantees and corresponding service level agreements to service providers, while taking advantage of both the high quality of service provided by circuit switched systems and the high utilization afforded by packet switched systems, would be highly desirable. Additionally, it would be highly desirable for such a system to dramatically increase, and maximally share, backbone network infrastructure capacity, and provide sophisticated service differentiation for emerging data applications, at least in part by dynamically managing the transport core bandwidth.

In short, a system which exploits the fast restoration, proven stability, low cost and low transport latency of SONET/SDH transport networks and bridges the gap between SONET/SDH transport and IP transport to thereby minimize operation cost and facilitate traffic engineering, would be highly desirable.

### SUMMARY

A telecommunications system in accordance with the principles of the present invention includes a convergence protocol that provides efficient inter-layer communications between nodes within the network. For example, the convergence protocol permits the transport layer of one network node to communicate directly with the service layer of another network node. In an illustrative embodiment, the service layer is configured as an internet protocol (IP) layer, which may employ asynchronous transfer mode switching, and the transport layer is a SONET transport layer. Each of the nodes may be a telecommunications element such as an add-drop-multiplexers (ADM) or a digital cross connect, for example. This inter-layer communication is achieved through a layer-1 pass through operation.

In one aspect of the invention, SONET bandwidth provisioning, which heretofore has been static, is rendered flexible. Additionally, the division between transport and service is eliminated. This increased flexibility, in turn, provides support for differentiated service guarantees and corresponding service level agreements. The system provides the high quality of service typical of circuit switched systems, and, at the same time, features the high utilization of a packet switched system. A system in accordance with the principles of the present invention merges IP transport and SONET/SDH transport through a novel convergence protocol. The flexibility provided by this approach permits dynamic management of a link's internal transport bandwidth thereby accommodating bursty traffic at minimal cost, with little end-to-end latency. For example, given one channelized interface, such as a 40C12C based OC48 link, with conventional static provisioning the termination of each tributary is fixed for extended periods, often months. But, in accordance with the principles of the present invention, the termination point of a tributary may be dynamically altered to accommodate a service provider's run-time needs. Consequently, the potential re-configuration period may be reduced from months to minutes, or even seconds.

In accordance with the principles of the present invention a communications network employs a protocol hereinafter referred to as the convergence protocol, which encapsulates the SONET/SDH transport details and which permits internal bandwidth to be managed on the fly to accommodate varying service demands. As a result, in general, data service providers need no concern themselves with the internal details of transport network infrastructure because of the smooth interface between external Internet backbone and SONET/SDH transport backbone. The SONET/SDH transport backbone may adaptively rearrange its internal bandwidth thus permitting automated end-to-end provisioning. One or more network elements are configured as core access points (CAPs) to provide an interface between SONET/SDH transport and external IP transport.

### BRIEF DESCRIPTION OF THE DRAWINGS

The above and further features, aspects, and advantages of the invention will be apparent to those skilled in the art from the following detailed description, taken together with the accompanying drawings in which:
Figure 1 is a conceptual block diagram of a communications network in accordance with the principles of the present invention;
Figure 2 is a conceptual block diagram of a network element in accordance with the principles of the present invention;
Figure 3 is block diagram of a communications network in accordance with the principles of the present invention;
Figure 4 is a diagram of a protocol data unit in accordance with the principles of the new convergence data protocol;
Figure 5 is a block diagram illustration of a conventional IS-IS level 2 LSP;
Figure 6 is a block diagram illustration of a conventional IS-IS variable field length field;
Figure 7 is a diagram of an enhanced IS-IS level 2 LSP in accordance with the principles of the present invention;
Figure 8 is a binding table diagram in accordance with the principles of the present invention;
Figure 9 is a path table diagram in accordance with the principles of the present invention;
Figure 10 is a header entry table diagram in accordance with the principles of the present invention;
Figure 11 is a status table diagram in accordance with the principles of the present invention;
Figure 12 is a conceptual block diagram of a communications system Which employs a convergence protocol in accordance with the principles of the present invention; and
Figure 13 is a scenario diagram of a bandwidth allocation process in accordance with the principles of the present invention.

### DETAILED DESCRIPTION

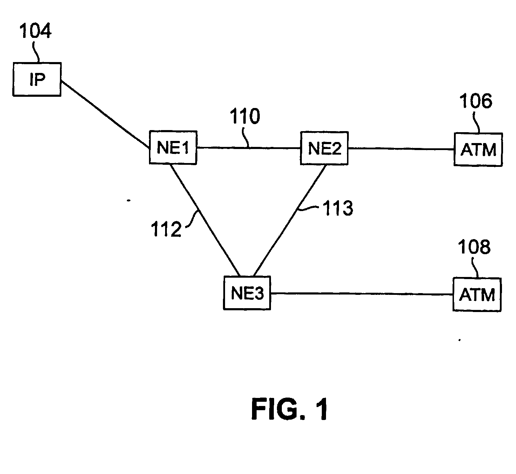

In the conceptual block diagram of Figure 1 a telecommunications system 100 including both packet switched and circuit switched components operates in accordance with the principles of the present invention. At the transport layer one or more SONET/SDH network elements (NE1, NE2, and NE3 in this illustrative embodiment) provide the circuit-switched cross connect for packet switched devices such as internet protocol (IP) device 104, asynchronous transfer mode (ATM) device 106, and and ATM device 108. The IP device 104 and ATM devices 106 and 108 may be a combination of one or more devices that could be arranged in a ring topology for example. The system 100 is shown with only a limited number of devices in order to simplify the exposition and understanding of the invention. Two cross-connect paths, 110 and 112, between the IP device 104 and ATM device 106 and between the IP device 104 and the ATM device 108, respectively, provide the specific circuit switched paths across the SONET/SDH transport layer. Each path may transit a plurality of SONET/SDH network elements and may share the bandwidth through each of those elements with other paths not shown in Figure 1. A service provider may provision a portion of the bandwidth on each of the paths 110 and 112 for use by customers who wish to transmit data between the IP device 104 and the ATM device 106 and between the IP device 104 and the ATM device 108, for example.

The layers discussed hereinafter refer to OSI layers, which are known and discussed, for example, by Ming-Chwan Chow, "Understanding SONET/SDH" ANDAN Publisher, Holmdel, NJ pages 2-31 through 2-32, which is hereby incorporated by reference. Unlike conventional systems in which inter-layer communications are restricted to intra-element communications, a telecommunications system in accordance with the present invention may perform inter-layer communications between network elements. That is, the service layer of a network element such as NE1 may communicate with the transport layer of network element NE2. As will be described in greater derail below, this communications path permits a network in accordance with the principles of the present invention to re-provision the paths 110 and 112 to accommodate changing bandwidth demand along the paths. This is in contrast with a conventional system wherein the provisioning is static and manual. That is, in a conventional system, a service provider, such as AOL, would have to request re-provisioning by the transport service provider, such as AT&T, and which would require the intervention of craft workers. Such re-provisioning and would typically take place only a few times each year.

In accordance with the principles of the invention if, for example, the path 110 is provisioned for a given transmission rate and a surge in demand occurs for the link between NE1 and NE2, the network element NE1 may directly request of the network element NE3 sufficient bandwidth to supply data to NE2 along paths 112 and 113 from NE1 to NE2. This immediate provisioning is accomplished through a direct inter-layer and inter-element communications in the direct communications channel (DCC) as described in greater detail below.

Each of the network elements NE1, NE2, and NE3, of Figure 1 could operate as a CAP, thereby permitting SONET transport for packet-switched networks such as those which employ Internet Protocol. A front-end aggregating router may be consolidated with an entry CAP, so packet level traffic may be served by an entry CAP. Additionally, because each CAP has the capability to monitor both layer-3 and layer-1 operations, each CAP also has the ability to re-arrange the size of individual logical-pipes "on the fly" (through exchanging Convergence Protocol message with other nodes). Consequently, the inventive system can adaptively adjust the bandwidth to optimize pipe-utilization, and, at the same time, improve service for best effort delivery traffic based on each CAP's performance monitoring. It may also adjust the bandwidth arrangement based on input from a centralized network management system which collects the global network traffic statistics.

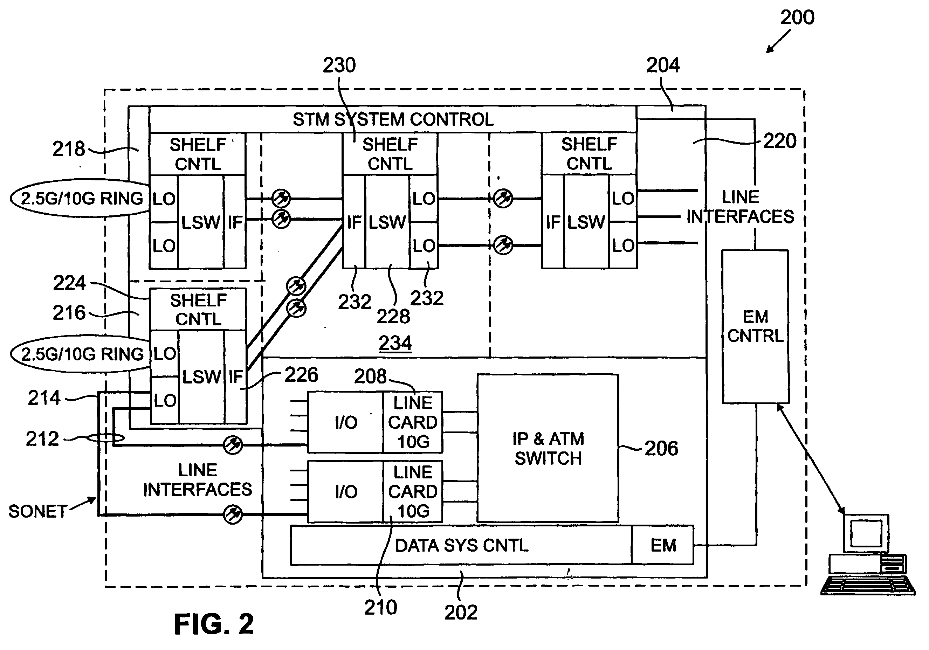

The conceptual block diagram of Figure 2 illustrates the interconnections between the packet-switched 202 and circuit switched 204 components of a network element 200 in accordance with the principles of the present invention. The packet-switched component 202 includes an internet protocol and asynchronous transfer mode switch 206 that is operatively connected to line cards 208 and 210. The line cards 208 and 210 are connected through SONET links 212 to the circuit switched section 204 through the circuit switched Input/output 214 of a circuit switched shelf 216. The circuit switched section 202 may include a plurality of local switch fabrics, or circuit switched shelves, such as fabrics 216. 218 and 220. Each of the fabrics may include I/O, such as I/O 214 and 216 of the fabric 216, a local switch core 222, shelf control 224, and an interface 226. The interface 226 provides communications between the local switch fabric and a central switch fabric 228. The central switch fabric 228 includes shelf control 230, an interface 232 for each of the local fabrics, and a central switch core 234.

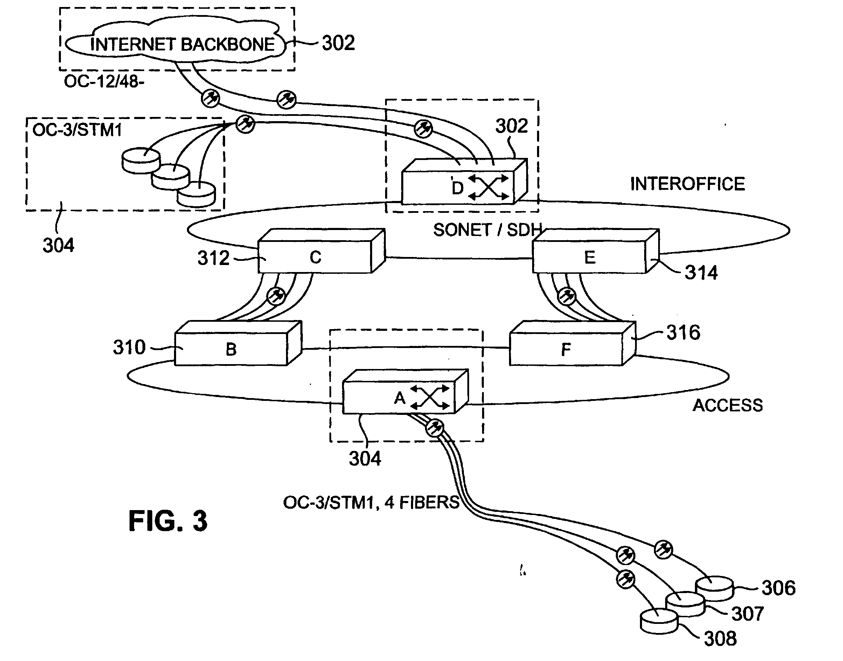

A network element such as the network element 200 of Figure 2 may be employed as an interface between circuits switched and packet switched networks. When the network element is used in this manner, it will be referred to as a core access point, hereinafter. The network 300 illustrated in the conceptual block diagram of Figure 3 includes core access points 302 and 304 which provide an interface between the IP transmissions of elements 306 and 308 and the SONET transport of elements 310, 312, 314, and 316. That is, transmissions among the network elements 310, 312, 314, 316, 302, and 304 are SONET/SDH transport transmissions, and transmissions among network elements 302, 304, 306, 307, and 308 are IP transmissions.

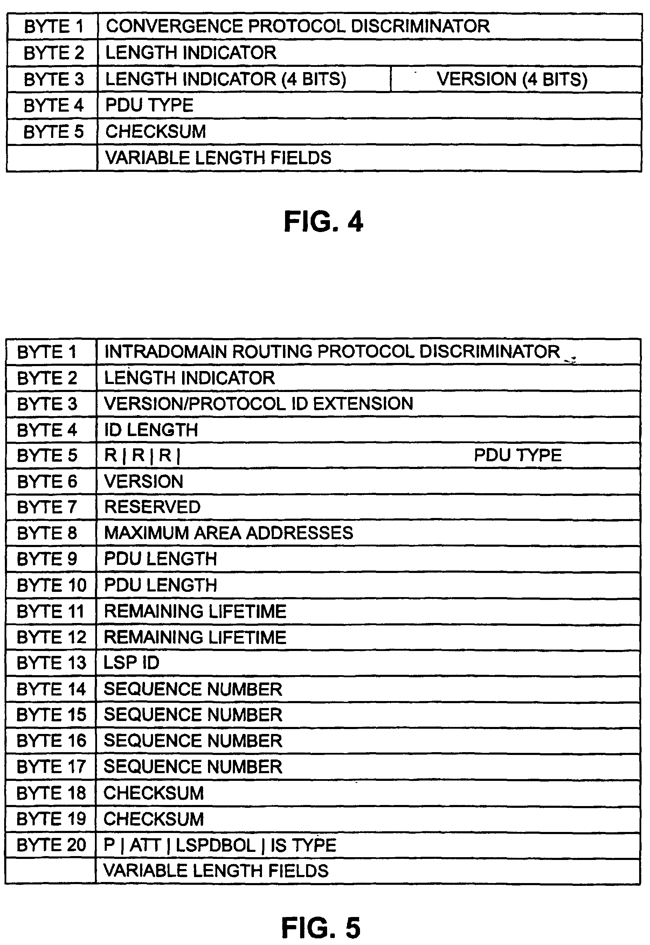

In accordance with the principles of the present invention, network elements that operate as core access points do so in conjunction with a new protocol that will be referred to hereinafter as the "convergence protocol". The convergence protocol encapsulates the OSI stack. The convergence protocol data unit format is illustrated in Figure 4. The data unit comprises a five byte header and variable length fields. The header includes a one-byte convergence protocol discriminator, a one-byte length indicator, one byte that is split between length indication and version number, a one-byte protocol data unit type indicator, and a checksum. Each protocol stack has its own layer structure. For example, in OSI there are seven layers: Physical, Link, Network, Transport, Session, Presentation, and Application. In this illustrative embodiment, the new protocol is positioned at the Application layer and the length indicator indicates the total length of the associated protocol data unit (PDU), in bytes. This number may not exceed 4K in this illustrative embodiment. The PDU type indicator may be used to denote any one of 256 PDU types, each of which has its own format associated with it. The checksum byte is stores the checksum for the PDU.

As noted, the PDU may be any of 256 types, including:

### PDU Type: 00000000 Function: Path Caching

The corresponding Variable Length Fields include the following:
- Source node NSAP address:: 20 bytes
- Destination node NSAP address:: 20 bytes
- The 1^{st} intermediate node NSAP address:: 20 bytes
- ...:
- The k^{th} intermediate node NSAP address:: 20 bytes
- ...:
- The last intermediate node NSAP address:: 20 bytes

### PDU Type: 00000001 Function: Path Caching Confirmation

The corresponding Variable Length Fields include the following:
- Source node NSAP address:: 20 bytes
- Destination node NSAP address:: 20 bytes
- Response value:: 1 byte
(Value: YES = 1 / NO = 0)

### PDU Type: 00000002 Function: Path Removal

The corresponding Variable Length Fields include the following:
- Source node NSAP address:: 20 bytes
- Destination node NSAP address:: 20 bytes

### PDU Type: 00000003 Function: Bandwidth Allocation

The corresponding Variable Length Fields include the following:
- Source node NSAP address:: 20 bytes
- Destination node NSAP address:: 20 bytes
- No. of STS-1 Slots:: 1 byte
- STS-1 Slot No.:: length determined by previous field

### PDU Type: 00000004 Function: Bandwidth Allocation Confirmation

The corresponding Variable Length Fields include the following:
- Source node NSAP address:: 20 bytes
- Destination node NSAP address:: 20 bytes
- Response value:: 1 byte
(YES = 1 / NO = 0)

### PDU Type: 00000005 Function: Bandwidth De-allocation

The corresponding Variable Length Fields include the following:
- Source node NSAP address:: 20 bytes
- Destination node NSAP address:: 20 bytes
- No. of STS-1 Slots:: 1 byte
- STS-1 Slot No.:: length determined by previous field

### PDU Type: 00000006 Function: Tunneled OSPF

The corresponding Variable Length Fields includes the following header:
- Source node NSAP address:: 20 bytes
- Destination node NSAP address:: 20 bytes

With original OSPF message which includes the following five type messages:
Hello
Database Description
Link State Request
Link State Update
Link State Ack
Note: The assumption is that OSPF-2 is supported. OSPF-2 is discussed, for example, in J.Moy, "OSPF R2.0, IETF RFC2328, ftp://ftp.isi.edu/in-notes/rfc2328.txt April 1998, which is hereby incorporated by reference in its entirety.

### PDU Type: 00000007 Function: Tunneled MPLS LDP

The corresponding Variable Length Fields includes the following header message:
- Source node NSAP address:: 20 bytes
- Destination node NSAP address:: 20 bytes
with the original LDP message which includes the following five type messages:
- LDP-REQUEST:: Label Request Message
- LDP-MAPPING:: Label Mapping Message
- LDP-WITHDRAW:: Label Withdraw Message
- LDP-RELEASE:: Label Release Message
- LDP-NAK:: LDP Notification

### PDU Type: 00000008 Function: Tunneled MPLS CRLDP

The corresponding Variable Length Fields includes the following header message:
- Source node NSAP address:: 20 bytes
- Destination node NSAP address:: 20 bytes
with the original constrained based routing label distribution protocol (CRLDP) message which includes the following messages:
- CRLDP-REQUEST:: Label Request Message
- CRLDP-MAPPING:: Label Mapping Message

In this illustrative embodiment, the Label Withdraw, Label Release and Label Notification messages used in LDP may be used for CRLDP directly.

As previously mentioned the invention may be employed using SONET or SDH. For the convenience and clarity of exposition, the following exemplary embodiments will be described in terms of SONET, using SONET-related terminology, such as STS-N, but may be extended to SDH embodiments by one of ordinary skill in the art.

### 1. Initialization

### 1.1 Intermediate System-Intermediate System (IS-IS) based topology Auto-discovery:

At initialization, assuming each CAP node has been provisioned with network service access point (NSAP) address and IP address, the CAP node runs both OSI stack and TCP/IP stack. Correspondingly, each core intermediate point (CIP) node (a SONET/SDH network element that is strictly digital cross-connect system (DCS) and serves as part of SONET/SDH transport) is provisioned with NSAP address, and runs only OSI stack. With Level 2 IS-IS supported, multiple-area based infrastructure is supported and the full 20-byte NSAP is used. Any variety of physical network topology, such as single-ring, ring-based mesh inter-connection, mesh based topology, etc., may be employed with the new, convergence, protocol. In one aspect of the invention the topology of this virtual autonomous system may be auto-discovered by establishing the IS-IS adjacency relationship based on an exchange of IS-IS HELLO message, then, establishing the physical topology of each node, including CAP and CIP, based on the exchange of IS-IS Link State PDU (LSP).

### 1.2 CAP path establishment

Each CAP node serves as gateway for this virtual autonomous system. Each CAP establishes neighbor relationships with external routing neighbors through either an interior gateway protocol (IGP) or exterior gateway protocol (EGP) routing message. After establishing neighbor relationships, the CAP then obtains external route reachability information through a routing update message. Each CAP pair establishes an internal logical path. That is, although there may be one or more intermediate nodes between CAPs each CAP establishes the logical path to the other CAP by discovering the other CAP's node address. To establish the logical path, IS-IS communication is enhanced as follows. Conventional IS-IS communication is described in, "Intermediate System To Intermediate System Intra-domain Routing Exchange Protocol For Use In Conjunction With The Protocol For Providing The Connectionless-mode Network Service (ISO8473)", ISO DP 10589, which is hereby incorporated by reference in its entirety. Conventional IS-IS Level 2 LSP exhibits the format illustrated in Figure 5.

In accordance with the principles of the present invention, the format of Figure 5 is employed, thereby maintaining compatibility with the existing IS-IS stack. However, the Variable Length Fields are expanded so that each CAP can flood its IP address information to the other CAPs based on IS-IS LSP update.

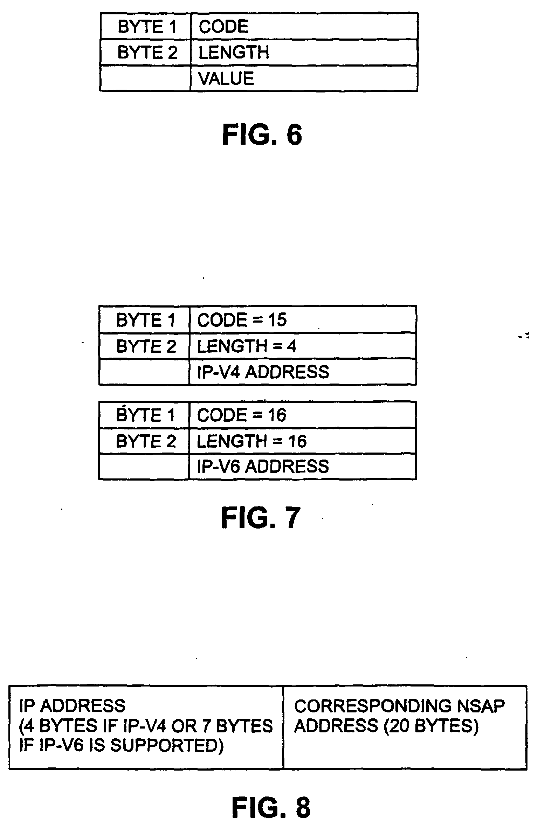

The IS-IS level 2 LSP Variable Length Field format is illustrated in the diagram of Figure 6, in which one byte describes the code, one byte describes the length of the field and the remainder, the value.

In accordance with the principles of the present invention, two CODEs, CODE 15 and CODE 16, are used to support IP-V4 and IP-V6 address announcement, as illustrated in the enhanced IS-IS level 2 LSP variable length field diagram of Figure 7. CODE 15 is used to advertise IP-V4 address and CODE 16 is used to advertise IP-V6 address. During the period of IS-IS LSP update, each CAP will advertise its management IP address (either IP-V4 or IP-V6) based on enhanced IS-IS LSP, and each CIP will ignore the enhanced IS-IS LSP field. In response to the reception of an enhanced IS-IS LSP a CIP will process the PDU conventionally; a CAP will additionally refresh its routing table, based on the incoming information, If the incoming data includes a new IP address, the CAP adds a new entry to its address binding table, as indicated in the binding table diagram of Figure 8. If the new addressed received by a CAP is the address of another CAP, the process, in which the assumption is that each CAP will only advertise its IP management address to another CAP, proceeds as follows:

### PROCESS 1, Logical Path Establishment:

### (Denoting the current node as A, which just received IP address from another CAP node: B)

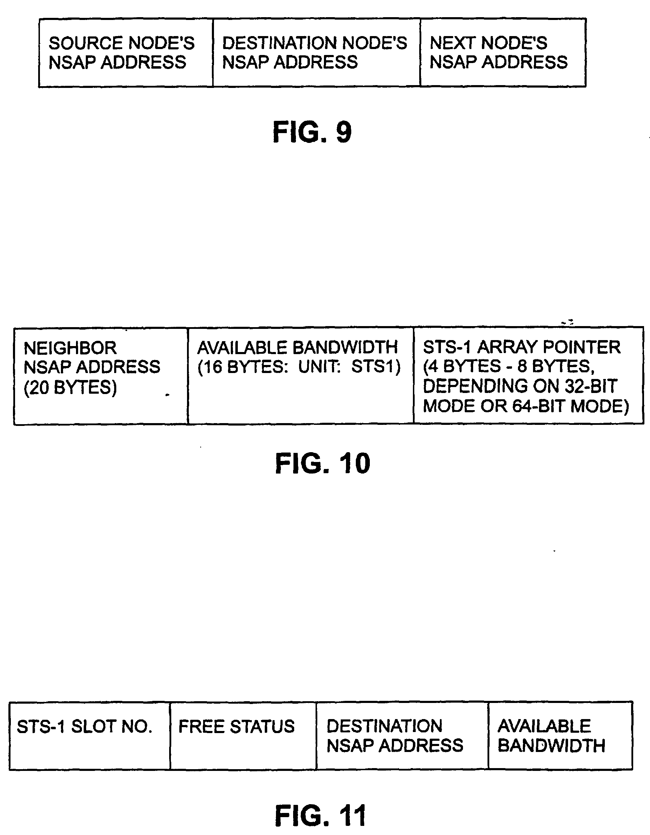

- Step 1:: Find the senders NSAP address associated with IP address of node B
- Step 2:: Discover the physical path between A and B based on IS-IS routing table look-up, record the path information
- Step 3:: Send the Convergence Protocol Path Caching message down this physical path, inside this message, source node is A, destination node is B, it also contains the NSAP address of intermediate nodes.
- Step 4:: For each node along the path, after receiving such Path Caching message, refresh its path information table: if there is no entry between A and B so far, add new entry; otherwise fill next node's NSAP information in the corresponding entry. Each entry of this path table should be of the format illustrated in the path table diagram of Figure 9.
- Step 5:: Determine whether it's the final destination or not:
If NO, strip its own NSAP address from Path Caching message, and pass this modified message to next node.
If YES, record that it has received path information from Source A. Double check whether it has a path to reach A:
   If YES, send the Path Confirmation message back to Source A.
   If No, based on A's NSAP address as contained in the received message, generate physical path to reach A based on IS-IS routing table look-up, send its own Path Caching message to A (source node is B, destination node is A, it also contains the NSAP address of intermediate nodes), then send Path Confirmation message back to Source A.
   Note: In this case, each intermediate node is guaranteed to receive path information from B to A first, then process (forward) Path Confirmation message received later.

Through the above process, each CAP not only establishes its own address binding table, but also obtains the path information to reach the other CAPs.

In accordance with the principles of the present invention, statically-provisioned internet channels are used to satisfy bursty-traffic through a dynamic bandwidth management mechanism. The dynamic bandwidth management mechanism includes resource management structures, such as a new header table and status table, and processes that a CAP may use to respond to various bandwidth requests. The mechanisms and processes used to provide dynamic bandwidth management will be discussed in greater detail in relation to Figures 10 and 11.

For both CAP and CIP nodes, there is resource table associated with each link in case one physical link is associated with one wavelength. In case WDM is deployed, there is resource table entry associated with each λ. The attribute of this resource table includes the address information of its neighbor, and the physical status of each of its STS-1 tributaries, here assuming the SONET network element is equipped with STS-1 level cross-connect capacity.

This treatment of resource tables makes the new protocol suitable for application with single wavelength based optics (such as nowadays' SONET/SDH) and with multiple wavelength based optics. In the 1st case, each link is associated with one entry at resource Header Table, and in the 2nd case each wavelength is associated with one entry at resource Header Table.

The header information for each node is organized as a table, as illustrated in Figure 10, and each entry in this table is associated with one link or associated with one wavelength. The format for each entry is illustrated in Figure 10. For each entry in this table, at initialization time, NSAP address field is provisioned as the neighbor's NSAP address, the Available Bandwidth field is provisioned as the physical capacity of this link/wavelength, or the number of STS-1 it can support. And STS-1 Array Pointer is initialized at run-time which points to the physical starting address of corresponding STS-1 array associated with this header table entry.

A Convergence Protocol based transport network in accordance with the principles of the present invention may employ equipment is compatible with and existing SONET equipment. Consequently, the existing SONET restoration approach such as UPSR and BLSR can be directly applied. Additionally, with a routing/LSR function in each CAP, the latest MPLS based restoration approach may also be used if an end-user prefers protection granularity at IP flow level instead of SONET path/line level. So in general, the new transport network architecture offers a variety of protection switching solutions.

The format of STS-1 Status Table entry is illustrated in the diagram of Figure 11, in which "Free Status" indicates whether this STS-1 slot has been allocated, the destination NSAP Address indicates what's the corresponding destination address for this tributary, and Available Bandwidth indicates the available bandwidth inside this STS-1 slot.

In accordance with the principles of the present invention, at run-time each CAP may receive various formats of Bandwidth Request, which may come explicitly from service provider through SNMP command, or implicitly from MPLS label switching path setup process. These requests may be classified into two different categories: bandwidth allocation and bandwidth de-allocation. Associated with each request, information including IP Destination Address and bandwidth is provided. In response, a CAP in accordance with the principles of the present invention may allocate or de-allocate bandwidth as described below. Either of the described processes may be used to serve as an explicit SNMP provisioning command Additionally, either process may be used to support dynamic allocation. The dynamic allocation may be used to support applications such as MPLS explicit routing, for example.

### STS-1 level bandwidth dynamic-allocation:

Note: here the bandwidth requirement should be N times of STS-1.

### PROCESS 2:

For initiating a CAP nodeA:
- Step 1:: Receive IP destination address.
- Step2:: Find corresponding NSAP address through Address Binding Table. Then based on Path Table, find the physical path to reach the next CAP.
- Step3:: Find next intermediate node's NSAP address based on information obtained from Path Table, Denote it as node B, Check the resource Header Table to find out the link which satisfies the following conditions:
The Neighbor of this link is B
The available bandwidth for this link exceeds the bandwidth as required
If there is no such link, Respond NO.
- Step4:: Send Convergence Protocol Bandwidth Allocation message to the next node, the message includes the source node NSAP address, the destination node NSAP address, required bandwidth, and identified STS-1 slots. Then wait for confirmation message from next node.
- Step5:: Get the Bandwidth Allocation Confirmation message from the next node.
If YES, modify corresponding resource Header Table and associated STS-1 Status Table to reflect the bandwidth allocation. Provision the corresponding framer. Respond YES.
If NO, respond NO.

For intermediate CIP node and destination CAP node:
- Step 1:: After receiving Bandwidth Allocation Message from previous node, check whether it is the final destination or not.
If YES, respond YES through Bandwidth Allocation Confirmation message to previous node and provision corresponding STS-1s as path termination so that traffic inside this group of STS-1s will be processed by packet switching fabric, provision the corresponding framer.
- Step2:: Otherwise, it's not the final destination. Through path table, find out the NSAP address of the next, denote it as N.
- Step3:: Check the resource Header Table to find out the link which satisfies the following conditions:
The Neighbor of this link is N
The available bandwidth for this link exceeds the bandwidth as required
If there is no such link, Respond NO through Bandwidth Allocation Confirmation message.
- Step4:: Forward Convergence Protocol Bandwidth Allocation message to the next node, the message includes the source node NSAP address, the destination node NSAP address, required bandwidth, the STS-1 No. the current node allocated. Then wait for confirmation message from next node.
- Step5:: Get the confirmation message from next node.
If YES, modify corresponding resource Header Table and associated STS-1 Status Table to reflect the bandwidth allocation. Setup corresponding cross-connect between STS-1 slots as specified by previous node and STS-1 slots it allocated, record this information in cross-connect table and respond YES.
If NO, respond NO.

### PROCESS 3: STS-1 level bandwidth de-allocation:

For an initiating CAP node:
- Step 1:: Receiving IP destination address.
- Step2:: Find corresponding NSAP address of the given IP address through Address Binding Table.
- Step3:: Find next intermediate node's NSAP address based on information obtained from The Path Table, Find out STS1s allocated to reach the corresponding NSAP from the resource Header Table and associated STS-1 Status Table, choose exact No. of them based on the given requirement.
- Step4:: Send Convergence Protocol Bandwidth De-allocation message to the next node, the message includes the source node NSAP address, the destination node NSAP address, released bandwidth and those identified STS-1 slots.
- Step5:: Modify corresponding resource Header Table and associated STS-1 Status Table to reflect the bandwidth de-allocation, re-provision the framer to de-allocate this group of STS-1,

For an intermediate CIP node and destination CAP node:
- Step 1:: After receiving Bandwidth De-allocation Message from previous node, check whether it is the final destination or not.
If YES, re-provisioning the framer of those STS-1 as contained in the incoming message. Return.
- Step2:: Otherwise, it's not the final destination. Through path table, find out the NSAP address of the next, denote it as N.
- Step3:: Based on cross-connect table, find out the corresponding STS-1 cross-entry.
Find the corresponding egress STS-1 slot entry and delete these cross-connect provisions.
- Step4:: Forward Convergence Protocol Bandwidth De-allocation message to the next node, the message includes the source node NSAP address, the destination node NSAP address , the required bandwidth and those identified STS-1 slot No. then return.

The topology discovery and dynamic bandwidth allocation just desribed may be used to establish and end-to-end multi-protocol label switched (MPLS) path that provides for minimal blocking. In order to support QoS enhanced MPLS, each CAP node should also support Label Distribution Protocol (LDP), as described in, L. Anderson et al, "LDP Specification, available at http://www.letf.org/internet-drafts/draft-ietf-mpls-ldp-03.txt, January 1999, and Constrained Routing Label Distribution Protocol (CRLDP) as discussed in, B.Jamoussi, et al, "Constraint-based LSP Setup Using LDP," http://www.letf.org/internet-drafts/draft-ietf-mpls-ldp-01.txt, both of which are hereby incorporated by reference in their entirety. In this exemplary embodiment. each CAP acts as a Label Switching Router (LSR). If one assumes that the CAP is positioned as core (or intermediate) LSR, the responsibility of edge LSR converts the conventional IP header into a label and initiates the LDP Path setup message.

To support explicit routing based traffic engineering, a CRLDP message is used to explicitly setup a Label Switching Path. Based on information advertised by each CAP, an external router will have clear topology information about this virtual autonomous system. Consequently, the external router is capable of setting a path traversing this virtual autonomous system.

Beyond best-effort delivery, in order to support end-to-end QoS label switching, a system in accordance with the principles of the present invention sends traffic contract associated with the corresponding IP flow along the explicit path. As a result, each node along the path can decide in advance whether it can support or deny the traffic contract request.

The process used to set up end-to-end QoS based LSP follows. It is assumed that CRLDP is used to reserve bandwidth instead of RSVP, since CRLDP is based on hard-state implementation. Since RSVP is based on soft-state protocol implementation, periodic state-refreshing may consume formidable bandwidth and computing, and CRLDP is therefore preferred.

Regarding the control path, when an external core router receives the IP flow's traffic request, core router forwards this request to an adjacent CAP, denoting it as A,if next node, as indicated in the explicit path, is an adjacent CAP. Node A then generates the equivalent bandwidth needed to reach next CAP, based on the given traffic contract and the Connection Admission Control mechanism. Node A then looks up its resource table to determine whether existing ports can satisfy this request or not. If Yes, Node A reserves the bandwidth and forwards the request to next node. On the other hand, if Node A's existing ports cannot satisfy the request, Node A calculates the closest No. of STS-1 needed to setup a new port to satisfy this request, then determines the internal path (tributary) based on:
(1). Next Node (CAP) information contained in the given request
(2). Physical path to reach this CAP based on Address Binding Table and Path Table
(3) Based on Process 2 Node A either provisions the path to accept this flow or denies this request. If this IP flow can be accommodated, the new Convergence Protocol-based Tunneled CRLDP message is sent to next node.
(4) If the next node is CIP (instead of destination CAP), after receiving Convergence Protocol based Tunneled CRLDP message, it will get the next node information based on path table, and forward it to next node, until it reaches the next CAP.
(5) The next CAP terminates the request, calculate its egress link, determines whether it can support it or not. If not, sends "No" back to entry CAP through Tunneled CRLDP message Otherwise, forward request to next node (router/CAP), if any, and wait for the response.
(6) After the next CAP gets the response (assuming positive, otherwise, forward NO back to the entry CAP) which includes the egress label, allocates its own ingress label for this IP flow, forward it to entry CAP through Tunneled CRLDP message including the label it allocated.
(7) After source CAP gets the response which includes the egress label allocated by destination CAP, allocates its own ingress label for this IP flow, forward it to the external core router.

Through the above control-message exchange, a system in accordance with the principles of the present invention sets up the LSP for the incoming IP flow traversing transport core. After establishing the LSP, the data flow is as follows.
(1)The packet of this IP flow is sent to entry CAP (denoting it as A) from the core router.
(2) Based on label exact matching, node A finds the corresponding internal channel/tributary to be used, swaps the ingress label into the egress label, and, if the next node is a CIP, Node A forwards the packet to next node.
(3) An intermediate SONET node passes the packet through this internal channel via the cross-connect fabric. This internal channel is a SONET path based on a cross-connect fabric that is established via the new convergence protocol signalling.
(4) The destination CAP terminates the internal channel/tributary via label exact matching, swaps the ingress label into egress label and sends the flow to next LSR.

Using this approach provides a flexible, bandwidth-adaptive backbone. Additionally, minimal end-to-end latency is needed, since only the entry CAP and exit CAP involve layer 2 label swapping and related packet flow queuing. Additionally, in the intermediate CIPs, layer-1 pass-through gives the minimal (deterministic) traversing latency.

In accordance with the principles of the invention, a bandwidth-on-demand SONET/SDH transport infrastructure may be effected using the new convergence protocol as set forth below.

In one illustrative embodiment, one which employs a centralized resource management approach, a network management system triggers bandwidth allocation. During the path-setup period, it sends the following information to the initiating node (only): the destination address and required bandwidth. Then Convergence Protocol is used to exchange bandwidth information among nodes along the path. Processes 2 and 3, as described above, can be used to support this approach.
Step 1: NMS sends physical path provisioning information to ATM/IP side of CAP S1, which includes the following information: (assuming through GUI interface)
   Management ATM/IP address of CAP S2
   Bandwidth required: in this example, assuming OC-3C
   Logical link layer provisioning information (in IP case, Frame-relay or PPP provisioning information) for both ends
   Logical port provisioning information (for both ends)
   ATM/IP address information (for both ends)
   Routing information provisioning (for IP case, OSPF/RIP/BGP, for ATM case, OPSF/PNNI)
Step 2: ATM/IP side of CAP S1 finds corresponding management NSAP address of CAP S2 through looking up its address-binding table based on given ATM/IP management address information of CAP S2.
   If corresponding management NSAP address of CAP S2 can't be found, negative response is sent back to NMS. Otherwise, proceeds to Step 3.
Step 3: ATM/IP side of CAP S1 forwards provisioning information to its SONET side, which includes bandwidth requirement information and management NSAP address of CAP S2
Step 4: SONET side of CAP S1 first determines whether inter-connect bandwidth inside CAP is sufficient to satisfy this requirement. If not, it sends negative response back to ATM/IP side of CAP S1, and then this negative response is further forwarded to NMS.
Step 5: If inter-connect bandwidth can accommodate this, based on established SONET topology, SONET side of CAP S1 finds out the path to reach SONET side of CAP S2, it also finds out its egress ports it can use to reach CAP S2. If it can't, it sends negative response back to ATM/IP side of CAP S1, and then this negative response is further forwarded to NMS.
Step 6. Then SONET side of CAP S1 determines that for any of identified egress port, whether egress port bandwidth is sufficient to satisfy this requirement. If not, it sends negative response back to ATM/IP side of CAP S1, and then this response is further forwarded to NMS.
Step 7: If its egress port bandwidth can accommodate this requirement, based on identified path information, SONET side of CAP S1 reserves certain STS-1 slots and initiates the signaling message flow and sends it to next node and waits for response from next node. The message includes path information and reserved STS-1 slots information.
   (Assuming source/explicit routing is used)
Step 8: If response received from next node is positive, SONET side of CAP S1 provisions corresponding cross-connects, and sends physical provisioning information through proprietary signaling to ATM/IP side of CAP S1. Then ATM/IP side will provision corresponding tributary, including physical layer, logic link layer and ATM/IP layer, then initiates routing stack. Then positive response is sent back to NMS (Navis in this case).
   If response received from next node is negative, SONET side of CAP S1 cancels STS-1 slot reservation, then sends negative response back to ATM/IP side of CAP S1, and then this negative response is further forwarded to NMS.

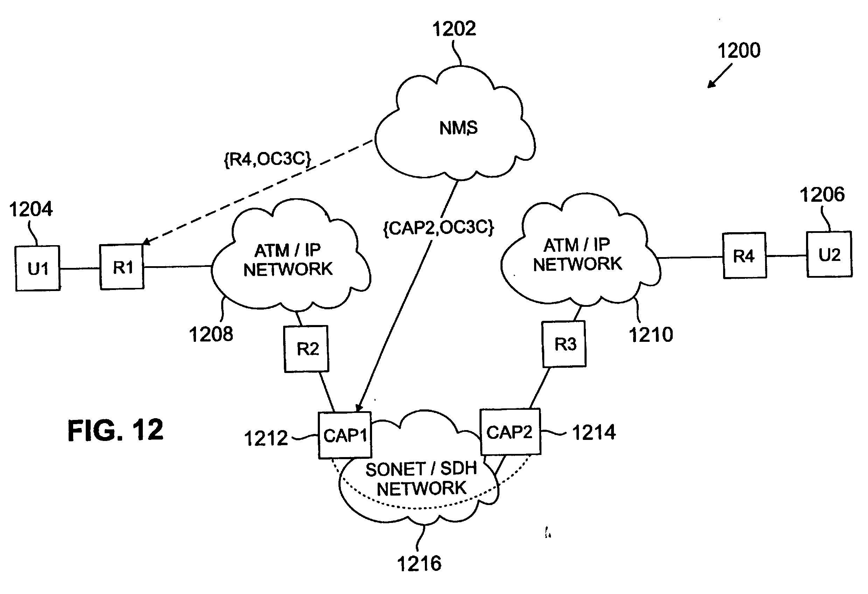

Using a distributed resource management approach, each CAP node has the up-to-date transport network topology and each CAP collects the performance monitoring information. Based on the above information, it makes a decision by itself as to whether a link's bandwidth should be adjusted. Each CAP also establishes the path based on routing table-lookup; makes the decision to re-adjust the bandwidth for each established tributary based on performance monitoring, and exchanges the bandwidth allocation/de-allocation information with other nodes along the path through Convergence Protocol Processes 2 and 3, as described above. Referring to Figure 12, the system 1200 includes a network management system 1202, first and second users 1204 and 1206 that are respectively connected to ATM/IP networks 1208 and 1210. Routers R1 through R4 connect users 1204 and 1206 through the ATM/IP networks 1208 and 1210 to CAPs 1212 and 1214, respectively, which provide access to the transport facilities of the SONET/SDH system 1216.

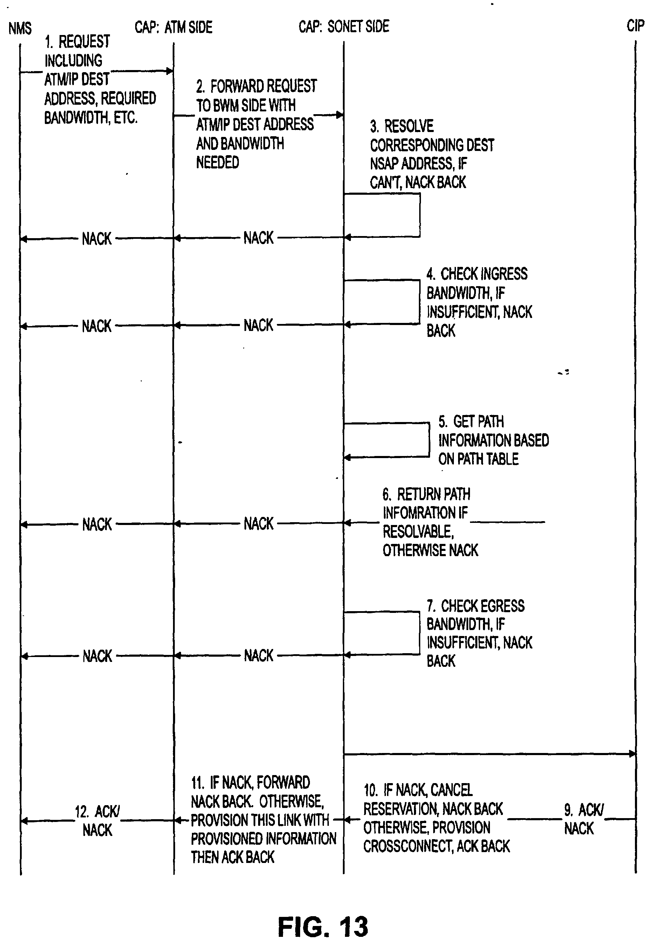

Such a bandwidth allocation process will be described below with reference to the scenario diagram of Figure 13 in which:
- Step 1:: NMS sends physical path provisioning information to ATM/IP side of CAP1, which includes the following information: (assuming through GUI interface)
Management ATM/IP address of CAP2
Bandwidth required: in this example, assuming OC-3C
Logical link layer provisioning information (in IP case, Frame-relay or PPP provisioning information) for both ends
Logical port provisioning information (for both ends)
ATM/IP address information (for both ends)
Routing information provisioning (for IP case, OSPF/RIP/BGP, for ATM case, OPSF/PNNI)
- Step 2:: ATM/IP side of CAP1 finds corresponding management NSAP address of CAP S2 through looking up its address-binding table based on given ATM/IP management address information of CAP2.
If corresponding management NSAP address of CAP2 can't be found, negative response is sent back to NMS. Otherwise, proceeds to Step 3.
- Step 3:: ATM/IP side of CAP1 forwards provisioning information to its SONET side, which includes bandwidth requirement information and management NSAP address of CAP2
- Step 4:: SONET side of CAP1 first determines whether inter-connect bandwidth inside CAP is sufficient to satisfy this requirement. If not, it sends negative response back to ATM/IP side of CAP 1, and then this negative response is further forwarded to NMS.
- Step 5:: If inter-connect bandwidth can accommodate this, based on established SONET topology, SONET side of CAP1 finds out the path to reach SONET side of CAP2, it also finds out its egress ports it can use to reach CAP2. If it can't, it sends negative response back to ATM/IP side of CAP1, and then this negative response is further forwarded to NMS.
- Step 6.: Then SONET side of CAP1 determines that for any of identified egress port, whether egress port bandwidth is sufficient to satisfy this requirement. If not, it sends negative response back to ATM/IP side of CAP1, and then this response is further forwarded to NMS.
- Step 7:: If its egress port bandwidth can accommodate this requirement, based on identified path information, SONET side of CAP1 reserves certain STS-1 slots and initiates the signaling message flow and sends it to next node and waits for response from next node. The message includes path information and reserved STS-1 slots information.
(Assuming source/explicit routing is used)
- Step 8:: If response received from next node is positive, SONET side of CAP1 provisions corresponding cross-connects, and sends physical provisioning information through proprietary signaling to ATM/IP side of CAP1. Then ATM/IP side will provision corresponding tributary, including physical layer, logic link layer and ATM/IP layer, then initiates routing stack. Then positive response is sent back to NMS (Navis in this case).

If response received from next node is negative, SONET side of CAP1 cancels STS-1 slot reservation, then sends negative response back to ATM/IP side of CAP1, and then this negative response is further forwarded to NMS in steps 9 through 11.

In another illustrative embodiment in accordance with the principles of the present invention, network employs protocol-driven resource management. With this approach, a bandwidth reservation protocol such as CRLDP or RSVP etc. may be used to trigger bandwidth allocation. As previously described, these protocols embody implicit bandwidth requirement (to support the corresponding QoS) and explicit path information. Based on a Connection Admission Control algorithm, the entry CAP node will convert the implicit bandwidth requirement into equivalent bandwidth, then exchange bandwidth allocation/de-allocation information with other nodes along the path as indicated in the incoming protocol message.

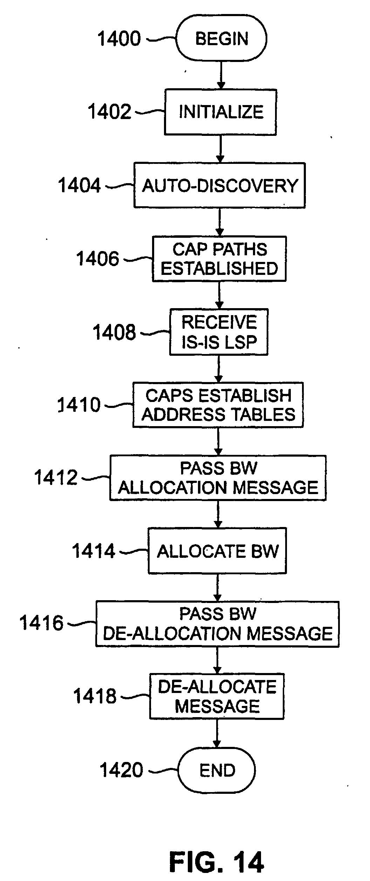

The flowchart of Figure 14 illustrates the process of initializing, establishing a CAP path and dynamically allocating bandwidth in accordance with the principles of the present invention. The de-allocation of bandwidth in accordance with the principles of the present invention is also illustrated in the flowchart. In step 1400 the process begins and proceeds to step 1402 where nodes employing the convergence protocol are initialized. The initialization includes the running of both OSI stack and TCP/IP stack in CAPs and the running of OSI stack in CIPs. The process proceeds from step 1402 to step 1404 where network nodes follow a process of auto-discovery as previously described in greater detail in the above section entitled, "IS-IS based topology auto-discovery". Following step 1404 the process proceeds to step 1406 where each CAP pair establishes a logical path between themselves. This logical path establishment may entail the flooding of a CAP's IP address information to other CAPs employing a label switched path variable length field. The logical path establishment process is described in greater detail in the above section entitled "CAP path establishment".

From step 1406 the process proceeds to step 1408 where a receiving node responds to the reception of a IS-IS label switched path message in accordance with the principles of the present invention by treating it in a conventional manner if the receiving node is a CIP. A CAP will, additionally, refresh its routing table, based on the incoming information. This process is discussed in greater detail in relation to Figure 7. From step 1408 the process proceeds to step 1410 where a CAP establishes an address binding table and obtains the path information necessary to reach other CAPs. This process is discussed in greater detail in relation to "Process 1", described above. From step 1410 the process proceeds to step 1412 where a node passes a convergence protocol bandwidth allocation message node to node until it reaches the destination CAP. In step 1414 the bandwidth along the path is allocated, if available. The processes of steps 1412 and 1414 are described in greater detail in the discussion of "Process 2", described above. At some point there may be a need for bandwidth de-allocation and, in that case, the process would proceed to step 1416 where a node passes a convergence protocol bandwidth de-allocation message, node to node, until the destination CAP is reached. In step 1418 the bandwidth is de-allocated, as appropriate. The processes of steps 1416 and 1418 are described in greater detail in the discussion of "Process 3", described above. The overall process may proceed to END in step 1420, for example, during maintenance or installation operations, for example.

The foregoing description of specific embodiments of the invention has been presented for the purposes of illustration and description. It is not intended to be exhaustive or to limit the invention to the precise forms disclosed, and many modifications and variations are possible in light of the above teachings. The embodiments were chosen and described to best explain the principles of the invention and its practical application, and to thereby enable others skilled in the art to best utilize the invention. It is intended that the scope of the invention be limited only by the claims appended hereto.

## Claims

1. A telecommunications system comprising:
a first network element which conforms to an OSI seven layer model; and
a second network element which conforms to an OSI seven layer model, each of the elements employing a convergence protocol whereby one of the layers of one of the network elements may communicate directly with a different layer of the other network element.

2. The system of claim 1 wherein the convergence protocol allows the transport layer of one network element to communicate directly with the service layer of another network element.

3. The system of claim 2 wherein the service layer is an internet protocol service layer.

4. The system of claim 2 wherein the transport layer is a synchronous optical network (SONET) transport layer.

5. The system of claim 2 further comprising a plurality of packet-switched devices and wherein said first and second network elements are connected to provide circuit-switched cross-connect for the packet switched devices.

6. The system of claim 5 wherein at least one of the packet-switched devices is an Internet protocol (IP) device.

7. The system of claim 5 wherein at least one of the packet-switched devices is an asynchronous transfer mode (ATM) device.

8. The system of claim 4 wherein a network element is responsive to a request from another network element using the convergence protocol for bandwidth along a link by granting bandwidth to the requesting network element.

9. The system of claim 8 wherein the request from one network element for bandwidth from another network element is effected via inter-layer, inter-element communications in a direct communications channel.

10. The system of claim 9 wherein a network element monitors layer three and layer one operations.

11. In a telecommunications system including packet-switched and circuit-switched network elements, a method comprising the steps of:
(A) sending a message from one network element at one network layer; and
(B) receiving the message of step (A) at a different network layer in a different network element.

12. The method of claim 11 wherein step (A) comprises the step of:
(A1) communicating directly from the transport layer of one network element with the service layer of another network element.

13. The method of claim 12 wherein the service layer is an internet protocol service layer.

14. The method of claim 12 wherein the transport layer is a synchronous optical network (SONET) transport layer.

15. The method of claim 11 further comprising the step of:
(C) providing circuit switched cross-connection for a plurality of packet-switched devices.

16. The method of claim 15 wherein step (C) comprises the step of:
(C1) providing circuit switched cross-connection for an Internet protocol (IP) device.

17. The method of claim 15 wherein step (C) comprises the step of:
(C2) providing circuit switched cross-connection for an asynchronous transfer mode (ATM) device.

18. The method of claim 12 further comprising the steps of:
(D) sending a request from one network element to another for additional bandwidth; and
(E) granting additional bandwidth to a network element that requests additional bandwidth.

19. The method of claim 18 wherein step (D) is effected via inter-layer, inter-element communications in a direct communications channel.

20. The method of claim 19 further comprising the step of:
(F) a network element monitoring layer three and layer one operations; and
(G)the network element of step (F) adjusting the bandwidth of a logical pipe in response to changes in layer three and layer one operations.

21. A method of establishing communications paths in a hybrid, circuit-switched/packet- switched telecommunications system comprising the steps of:
(A) initializing nodes that provide an interface between SONET/SDH transport and external IP transport, by running both OSI stack and TCP/IP stack;
(B) initializing SONET/SDH network elements that are digital cross-connect, by running OSI stack; and
(C) auto-discovering the network topology using intermediate system-intermediate system (IS-IS) adjacency relationships.

22. The method of claim 21 wherein step (C) further comprises the step of:
(D) establishing the physical topology of each node within the telecommunications system based on the exchange of IS-IS Link State Protocol Data Units.

23. The method of claim 21 further comprising the step of:
(E) establishing a logical path between a pair of CAPs.

24. The method of claim 23 wherein step (E) further comprises the step of:
(E1) the refreshing of a routing table by a CAP in response to the reception of a IS-IS label switched path message.

25. The method of claim 24 wherein step (E) further comprises the step of:
(E2) a CAP's establishment of an address binding table and determining the path information required to reach another CAP.

26. The method of claim 23 further comprising the step of:
(F) passing a convergence protocol bandwidth allocation message to a destination CAP.

27. The method of claim 26 further comprising the step of:
(G) a destination CAP's allocation of bandwidth in response to the reception of a bandwidth allocation message as in step (F).

28. The method of claim 27 further comprising the step of:
(H) a destination CAP's de-allocation of bandwidth in response to the reception of convergence protocol de-allocation message.
